# EUROPEAN PATENT SPECIFICATION

(11) **EP 0 524 703 B1**
(45) Date of publication and mention of the grant of the patent: **21.08.1996**
(21) Application number: 92202998.8
(22) Date of filing: 17.06.1988
(51) Int. Cl.: B60C 9/22, B29D 30/42, B29D 30/70

(54) **Apparatus for forming a band of a radial tyre**
Einrichtung zur Herstellung eines Gürtels für Radial-Reifen
Appareil pour fabriquer une bande pour un pneumatique radial

(30) Priority: 18.06.1987 JP 151987/87; 03.07.1987 JP 167435/87; 31.07.1987 JP 193523/87; 29.09.1987 JP 244775/87; 31.03.1988 JP 80495/88; 06.04.1988 JP 85671/88
(43) Date of publication of application: 27.01.1993
(62) Divisional of application: 88905450.8
(73) Proprietor: SUMITOMO RUBBER INDUSTRIES LIMITED, Chuo-ku Kobe-shi Hyogo 651 (JP)
(72) Inventor: Kojima, Yoshihide, Takarazuka-shi, Hyogo 665 (JP); Takami, Masao, Daiapalesu-Toyota-Kosakaoka 107, Aiichi-ken (JP); Sakuno, Hiroaki, 1-44 Miyakobashiyama, Nishi-shirakawa-hun, Fukushima-ken (JP); Miyanaga, Yoshinobu, Shirakawa-shi, Fukushima-ken (JP); Kadowaki, Katsunori, Kobe-shi, Hyogo 673 (JP)
(74) Representative: Stewart, Charles Geoffrey

(56) References cited:
- FR-A- 2 351 778
- FR-A- 2 354 874
- US-A- 3 721 599
- US-A- 3 941 644
- US-A- 4 528 052

## Description

This invention relates to a pneumatic radial tyre having a band reinforcing the belt or breaker and more particularly relates to an apparatus for forming the band of the tyre.

Pneumatic radial tyres having a belt of layers of metal cords reinforcing the tread portion have been conventionally used on high performance cars, and high speed durability, high speed driving stability and steerability have been obtained by means of the strong hoop effect of the belt in the overall tyre structure. The conventional maximum speed of cars of 100 to 200 km/h has however, been changed by vehicle developments and now some passenger cars may travel at 200 km/h or more, and sometimes at 300 km/h. In the field of racing cars, vehicles capable of such speeds already exist, but their driving is only in special conditions so that the tyres may be designed sacrificing some of the performance characteristics required in ordinary driving, for example, wear resistance and fuel economy. They are thus unsuitable to withstand general use on public roads.

If radial tyres having a conventional metal cord belt reinforcement are used at the high speeds mentioned above, their tread portions are deformed by centrifugal force and repeated distortions are generated in the tread portion. This deformation appears in various phenomena depending on the size, structure and materials of the tyre and may be, for example, a lifting phenomenon in which the outer diameter at the shoulder portion increases, a phenomenon in which the outer diameter in the centre portion increases and the radius of curvature of the tread decreases or the surface becomes an irregular curve, or a standing wave phenomenon.

These effects generate heat by repeated distortions in the tread and the temperature in the tread portions rapidly rise and the adhesion between the metallic cord surfaces and the rubber in the belt may fail and cause so called ply separation. In particular, tyres used in high speed driving as described above require a broad ground contact area to secure enough grip on the road surface and, therefore a flattened tyre having a wide tread is employed. In such wide profile flattened tyres since the size of the tread portion in the entire tyre is large, the above mentioned phenomena of deformation and heat generation tend to occur to a wide extent.

Use of a rubber with a small loss tangent (tan δ) is one effective means to decrease the heat generation, but when a rubber with a small loss tangent (tan δ) is employed, the tread grip lowers and therefore the required high speed tyre performance properties are hard to obtain.

Alternatively, a decrease of the deformation of the tread portion without changing the formulation of the tread rubber can be achieved by increasing the hoop effect of the belt, but then the number of metal cord plies of the belt is increased and the weight of the tyre increases thus causing other adverse effects on the high speed properties of the tyre and a car using the tyre.

To solve these problems, it has been proposed to arrange a band comprising a multiplicity of independent cords embedded in rubber and parallel with each other in the circumferential direction of the tyre as disclosed in Japanese Patent Publication Kokai No. 47-14805, and Japanese Patent Publication Kokoku No. 55-45402. This band or bandage however, has at least one joint portion extending in the widthwise direction. The stiffness in the circumferential direction changes and usually decreases at this joint portion and the resultant large distortion tends to induce breakage. In addition, the joint portion may impair the uniformity of the tyre.

Accordingly, such a band is not good enough for use in the high speed ranges described above. A tyre having such a band is fine in ordinary speed ranges but in a speed range of more than 200 km/h or more than 300 km/h, it is impossible to prevent the deformation caused by the centrifugal force on the tread portion and insufficient durability is obtained.

It is desirable to provide a tyre having a structure capable of withstanding use in these high speed ranges without sacrificing other general performance properties. Another proposal to solve the above problems provides a jointless band formed by winding one or a plurality of organic fibre cords spirally over the belt parallel to the central circumferential line of the tyre to produce band in which the densities of spirally wound cord are different between the crown and shoulder portions of the tyre so as to enhance performance. This is disclosed in Japanese Patent Publication Kokoku No. 44-17801 and Japanese Patent Publication Kokoku No. 57-61601, However, such a means has the problem that it takes much time to wind the cord and so productivity is inferior, and since the wound cord becomes asymmetrical in the section of the tyre, the uniformity properties such as **conicity** are poor. Furthermore, with a changing cord density, if the density is set too high, the cord surfaces contact each other, which may induce breakage at these points.

It is also desirable to provide a radial tyre having a superior uniformity and excellent productivity in which breakages in the shoulder portion of the belt due to lifting in driving are prevented and contact between cord surfaces is inhibited.

It is the object of this invention to provide an apparatus for forming a belt reinforcing band which is suitable for use in the above mentioned tyres.

Turning now to the manufacturing process for radial tyres, the usual process is to form an assembled body by winding each of the belt, band and tread rubber sequentially onto a belt drum.

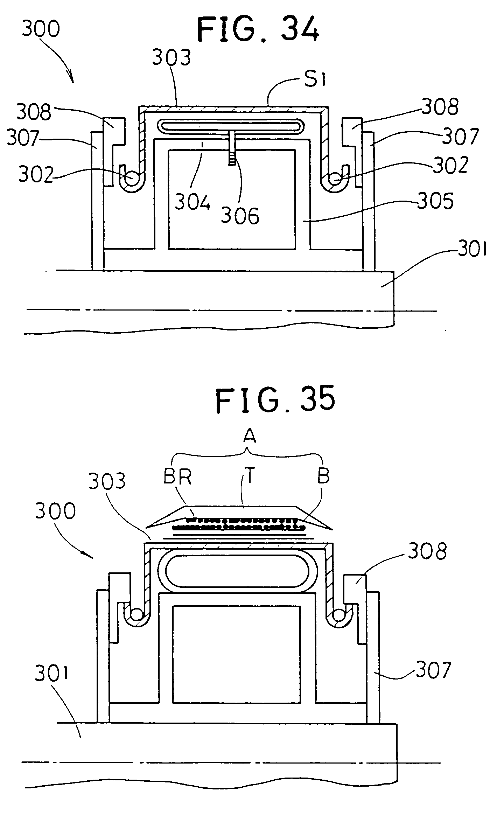

As shown in Figs.34 and 35 a conventional belt drum 300 is supported rotatably at one side on a shaft 301 and has a belt forming surface S1 shaped in the circumferential direction as an annulus and having a linear sectional shape in the axial direction. The belt forming surface S1 is formed by plural slats 303 each having a width of approximately 40 mm arranged radially over the entire circumference, and both ends of each slat are fastened by a pair of annular springs 302. An air bag 304 equipped with an air pipe 306 is fixed inside the slats each in the radial direction on a supporting base 305. Drum outer diameter defining rings 308 are detachably mounted on frames 307 disposed on both sides of the slats.

A conventional method of manufacturing an assembly of the belt, band and tread by using the above known belt drum is as follows:-

The drum outer diameter is expanded by inflating the air bag with air supplied through the air pipe, at this time, the outer diameter of the drum is restricted to a specified belt adhering diameter by the drum outer diameter defining ring:

A belt B is formed (see Fig.35) by winding onto the belt forming surface S1 a plurality of plies each composed of cords which are coated with rubber in the form of a cord fabric.

This is arranged so that the cords of each successive ply cross at an angle of 10 to 40 degrees with regard to the circumferential direction.

A band BR is then formed by winding on one or two plies of cords which are coated with rubber in the form of cord fabric, onto the circumferential surface of the belt B at an angle of almost 0 degrees with respect to the circumferential direction and a tread rubber T is wound onto the radially outer side of the band BR, thus forming an assembly A.

The assembly is taken off the belt drum by using a holding means and transferred to the centre of a preassembled cylindrical tyre carcass on a tyre forming drum. The tyre carcass is sequentially expanded into a toroidal shape by air pressure so as to have its circumferential surface pressed tightly against the inside of the belt assembly. The belt is then pressed and attached to the tyre carcass over its full width by a tread attaching roller so that the assembly is consolidated to provide a raw tyre.

Furthermore, in Japanese Patent Publication Kokai No. 61-51979 there is disclosed a method for forming a band by spirally and continuously winding one or a multiplicity of synthetic fibre cords in the circumferential direction onto the circumferential surface of a belt formed on the belt ring, covering at least 70% of the belt width, with a pitch of 5 to 15mm in the widthwise direction.

In this method however since the winding pitch of the cord is as wide as 5 to 15mm, the disadvantageous expansion of the equatorial diameter of the raw tyre due to the shaping pressure in the vulcanising process is effectively prevented, but the thermal shrinking force of the band is weaker at the shoulder portions than in the centre portion.

Consequently, one of the necessary characteristics, that is to prevent the lifting phenomenon of the belt owing to centrifugal force during high speed running is not achieved.

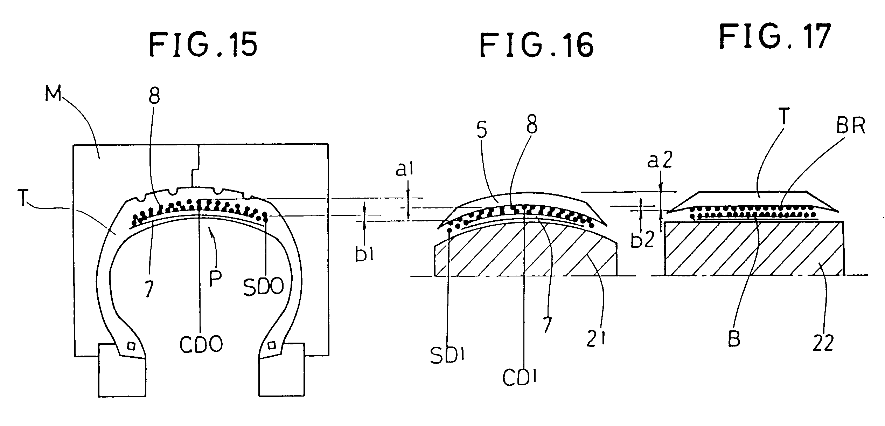

This problem results from the fact that the band is formed by winding on a cylindrical drum having a linear sectional shape in the axial direction as described above and as shown in Figs. 34, 35 and 17 even though the belt and band of the finished tyre in the mould are convex in sectional shape in the axial direction (final shape) as shown in Fig.15.

That is, though the circumferential winding lengths in forming the band are identical for the shoulder portions and the centre portion the circumferential lengths of the belt after fully shaping and vulcanising the tyre become shorter in the belt shoulder portions and longer in the belt centre portion due to the shaping (expanding) process in vulcanisation. As a result, the stretch becomes larger at the centre portion and smaller at the shoulder portions of the belt, and the thermal shrinking force is lessened at the shoulder portions. Since a larger stretch is applied to the centre portion of the belt, a stretch difference exceeding 2% usually occurs.

The trouble mentioned above is caused because the stretch difference appears as the differences in residual elongation and thermal shrinking force. Here, the term "stretch" means percentage of finished diameter to the winding diameter of the belt.

Accordingly, another object of this invention is to provide an assembly of belt, band and tread rubber in which the difference of the stretches between the centre portion and the shoulder portions of the bands is made as small as 2% or less and to raise the thermal shrinking force at the shoulder portion.

An apparatus according to the preamble of claim 1 is known, for example, from US-A-3941644.

Accordingly the invention provides an apparatus to form a band on the belt assembly of a radial tyre where the band is a continuous, spiral winding of one of more organic fibre cords wound on the circumferential surface of a belt formed on a belt drum or ring, said apparatus comprising a let off means for drawing off the cord to be wound towards the belt, a traverse means for traversing the let off means in the widthwise direction of the belt and a traverse controlling means for controlling the traverse of said let off means, the let off means comprising a moving frame capable of traversing an arm mounted on the moving frame and a plurality of guide pulleys supported by the arm and guiding the cord to be wound, characterised in that the traverse means comprises a screw shaft rotatably driven and threaded to the let off means, and a guide shaft for guiding the traverse of the let off means and the traverse controlling means comprises a motor for driving said screw shaft, a drive unit and a pulse counter for the belt ring or belt drum.

Further aspects of the invention will be apparent from the following descriptions of some embodiments in conjunction with the attached diagrammatic drawings in which:
Fig. 1 is a sectional view showing a first arrangement of a belt, a band and a tread rubber in a pneumatic radial tyre;
Fig. 2 is a perspective view showing another arrangement of a belt, a band and a tread rubber in a pneumatic tyre;
Fig. 3 is a perspective view showing schematically the state of the winding of a cord of the band;
Fig. 4 is a section view showing still another arrangement of a belt, a band and a tread rubber in a pneumatic tyre;
Fig. 5 is a perspective view showing cords formed into a tape;
Fig.6 is a perspective view showing a single coated cord
Fig.7 is a perspective view showing a non coated cord
Figs.8 to 11 are sectional views of a method for producing radial tyres of this invention.
Figs.12 to 14 are views showing a manner of winding a cord for forming a band of symmetrical structure.
Fig.12a is a view showing a manner of winding or provide an asymmetrical structure.
Figs.15 to 17 are views for illustrating a method for forming a belt band tread rubber assembly of this invention, in which Fig 15 shows curing of a tyre, Fig.16 shows a forming of an assembly by the present apparatus and Fig 17 shows a conventional forming method, Fig. 18 is an axial sectional view showing an embodiment of an apparatus for forming the belt band tread rubber assembly of this invention.
Fig.19 is a section view along the line 24-24 in Fig 18.
Fig.20 is a section view showing the expanded diameter state of the apparatus
Fig.21 is a perspective view showing the outer diameter defining member
Figs.22 and 23 are views showing a manner of finding the shape in the axial section of the above mentioned apparatus in the expanded state
Figs.24 to 26 are sectional views showing another embodiment of the apparatus for forming a belt band tread rubber assembly.
Fig.27 is a view showing a step in a method for producing radial tyres.
Fig.28 is a front view showing an embodiment of the band forming apparatus.
Fig.29 is a side view of Fig.28
Fig.30 is a view showing an instance of use thereof

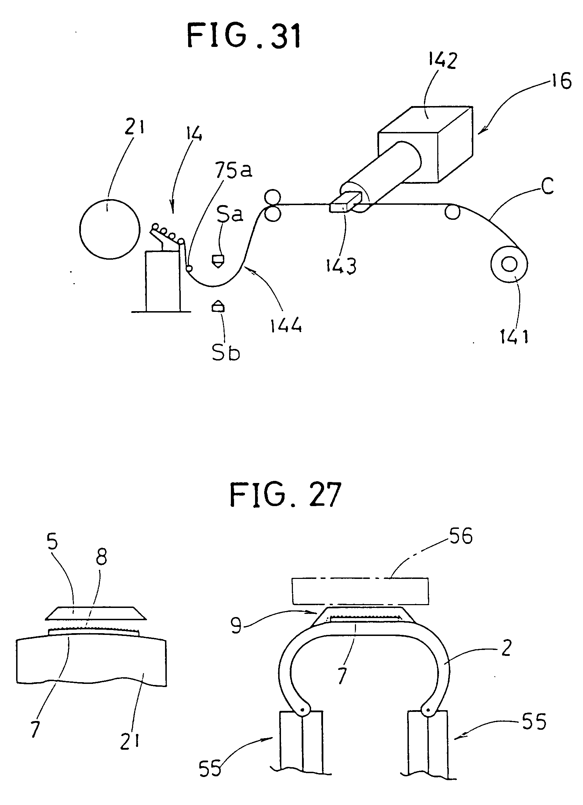

Fig.31 is a view showing another instance of use thereof
Fig.32 is a front view showing another embodiment of the band forming apparatus.
Fig.33 is a side view of Fig. 32.
Figs.34 to 35 are axial sectional views showing a conventional belt drum

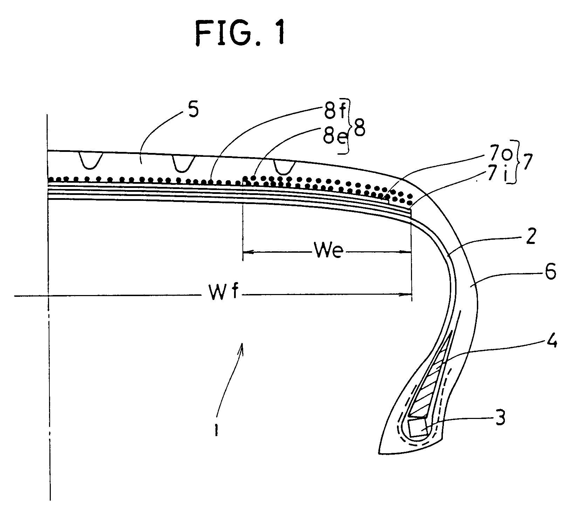

In Fig 1 a tyre 1 comprises a pair of bead cores 3, a pair of apexes 4, a carcass 2, annular tread 5, a pair of sidewalls 6, a belt 7, and a band 8.

The bead cores 3 are arranged in the bead portions of the tyre. The bead apexes 4 are made of hard rubber and disposed outside the bead cores 3 with respect to the radial direction of the tyre 1. The carcass 2 comprises a ply of cords arranged in the radial direction of the tyre, and turned up around the bead cores 3.

The carcass 2 may comprise one or a plurality of plies.

The belt 7 is arranged on the shoulder outer side of the carcass 2 and comprises two or more plies of fabric of metal cords. It is composed of an inner ply 7i and an outer ply 7o, but one or two other plies may be interposed between them. In the drawing, the inner ply 7i has a larger width than the outer ply 7o but it does not matter if the outer ply is the wider. If the two plies have the same width, however, the bending stiffness in the section varies drastically at the edges, which makes an adverse effect on the durability, so that it is necessary to make these plies (7i & 7o) of different widths.

The metal cords of the belt plies 7o, 7i are arranged at an angle of 10 to 30 degrees with regard to the equatorial line of the tyre.

The band 8 is located on the radially outer side of the belt 7. The band comprises a full band layer 8f and a pair of edge band layers 8e.

The full band layer 8f is disposed over the full width of the belt 7, that is, over the full width of the inner ply 7i which is the wider ply. Each edge band layer 8e is arranged between the full band layer 8f and the belt 7 or between the full band layer 8f and the annular tread 5 in the region near the belt edge.

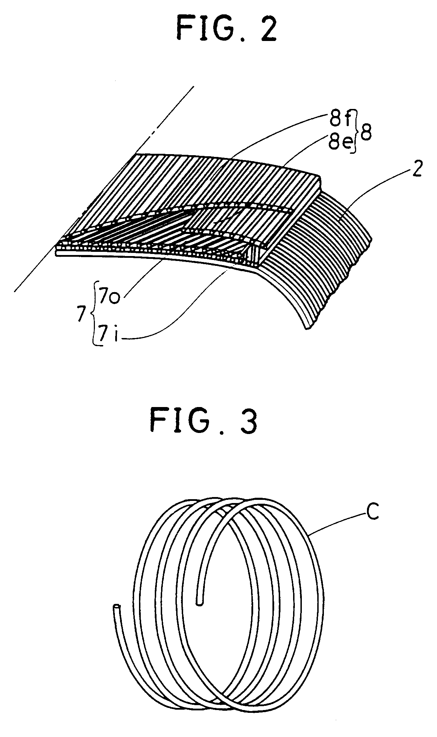

Fig.2 is a perspective view showing the arrangement of the carcass 2, belt 7 and band 8 in the case where the disposition of the edge band layers 8e and full band layer 8f is reversed.

The edge band layers 8e and full band layer 8f are composed of organic fibre cords substantially parallel to the equatorial centre line of the tyre. The organic fibre cord C is a single long cord composed of a multiplicity of single yarns or twisted yarns such as spun yarn, monofilament yarn or multifilament yarn or organic fibre made of nylon 66, nylon 6, polyester, Kevlar or the like.

The cord C is formed of one or more cords wound spirally in the circumferential direction of the tyre in each layer as shown schematically in Fig.3. Consequently, conventional joints no longer exist in each layer and the troubles caused by the existence of joints are completely avoided. In the conventional joint, both ends in the circumferential direction of each layer are commonly made to contact each other end to end, so that this portion cannot endure a large tension in the circumferential direction. It therefore often induces breakage in high speed use. The joint portions also spoil the uniformity of the tyre.

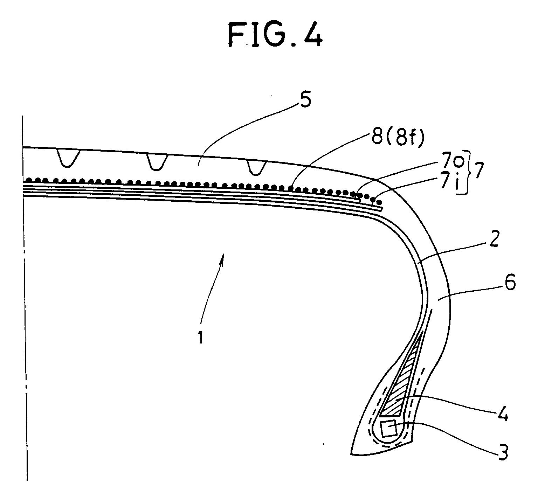

Fig. 4 is a sectional view showing another arrangement in which the band 8 has only a full band layer 8f with no edge band layer 8e.

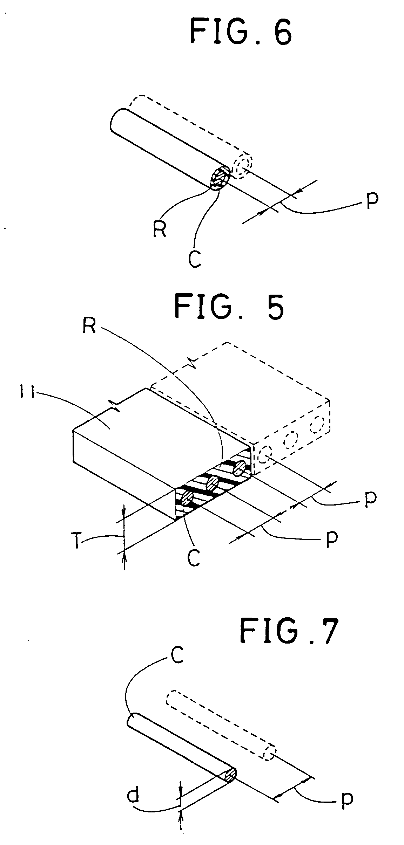

Fig.5 shows cords in which several cords are aligned and combined into one body by coating with rubber R and forming a tape shape (belt or ribbon like body). If a plurality of cords are arranged and united in a body like this it becomes easy to accurately set a pitch p between the cords. This tape like body can be easily formed by an extruding machine or a profile calender. In the case of a ribbon, it is preferably from the viewpoint of uniformity of the tyre to set the number of cords to such an extent that the angles of the wound cords to the circumferential direction may not exceed 0 degrees by much. Here, the drawing shows a tape like body 11 composed of three cords, but the number of cords may be selected in a range not exceeding 10 or in a preferred tape 5.

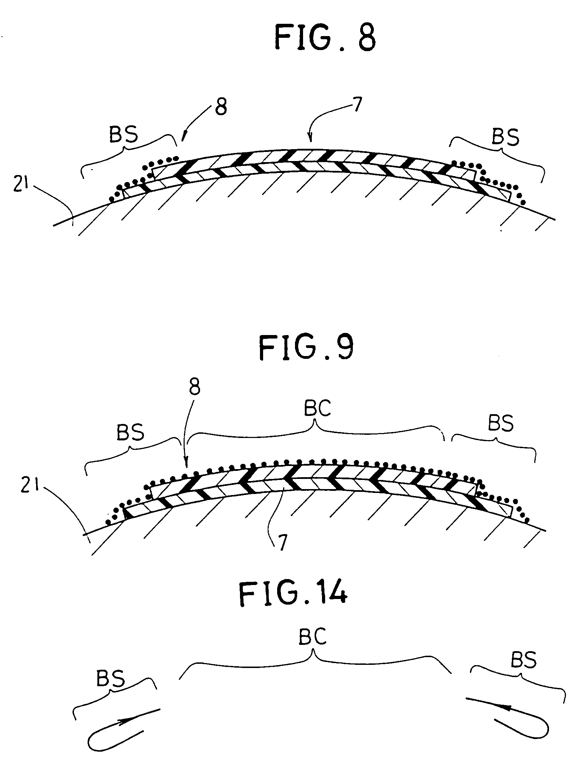

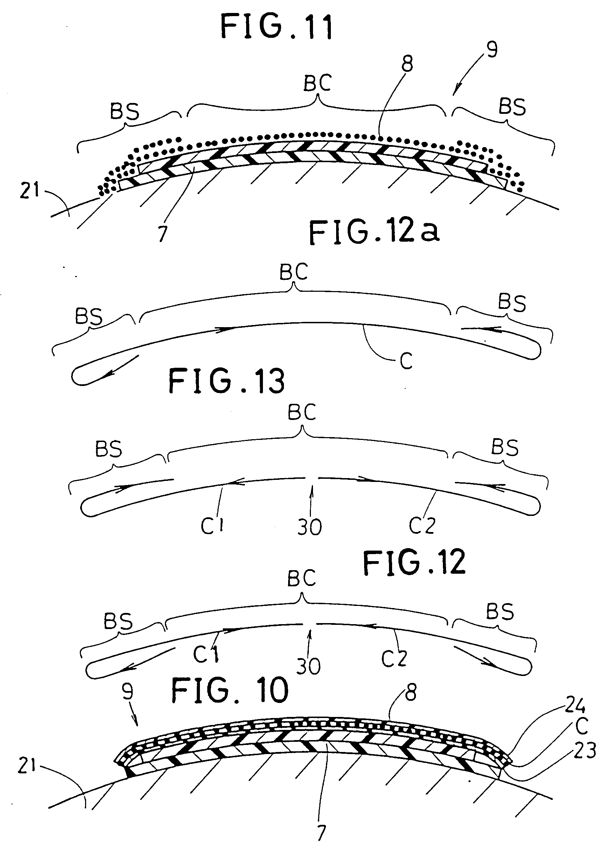

Figs.8 to 11 are sectional views showing the winding process for an organic fibre cord in manufacturing process of the tyre. Figs.12 and 13 are sketches showing the method of winding.

Fig.8 shows forming a band having only a pair of so called edge band layers wherein one or more rubber coated cords C are wound at both shoulder portions BS of the belt 7 onto the circumferential surface of the belt 7 which is a two ply structure wound onto the belt drum or belt ring 21. In this case, it is necessary to set the winding pitch of the cord at 0.5 to 5.0mm as described above to prevent the lifting of the shoulder portions of the belt. The above mentioned spiral winding should be made in one turn or more, in compliance with necessity, outwardly from the equatorial plane of the tyre or in the opposite direction so as to have a symmetric structure to each other.

Fig.9 shows the formation of a band equipped with only a so called full band layer by continuously winding the rubber coated cord C over 70% of the entire width of belt 7 on the outer surface of the belt 7 of a two ply structure wound on the belt drum or belt ring 21. It is necessary that the winding pitch is from 0.5 to 5.0mm in the shoulder portions BS of the belt to prevent the lifting in the belt shoulder portions, and also the pitch is from 0.5 to 15.0mm in the centre portions BC of the belt. This spiral winding is also made, in the same way as the above, in one turn or more as necessary to give a symmetric structure outwardly from the equatorial plane of the tyre or in the reverse direction.

In Fig.10 a thin rubber sheet 23 is wound onto the outer surface of the belt 7 of a two ply structure wound on the belt drum or belt ring 21, and one or more non rubber coated cords C are wound continuously and spirally onto the rubber sheet in the circumferential direction at a pitch 0.5 to 5.0 mm in the belt shoulder portions and 0.5 to 15.0mm in the belt central portion. Furthermore, a second rubber sheet 24 is wound to sandwich the spirally wound cords between the rubber sheets. In this case, for the material of the rubber sheet it is preferable to use a material having a good adhesion to the cord in the same way as the material used as the above mentioned coating rubber. After winding the second rubber sheet 24, the rubber sheet 24, cord C and the rubber sheet 23 are consolidated by pressure rollers to cause the rubber to enter between the cords before winding the tread rubber.

Fig.11 shows a band composed of a combination of a full band layer and edge band layers.

In this band, the number of cords per unit length (density) cord size and pitch can be changed as occasion demands.

In any case, winding is conducted so as to be symmetrical in structure with regard to the tyre equatorial plane in the same way as described above. That is, in the case of a structure having two layers at portions BS and one layer at portion BC, there are methods such as winding cords C1 and C2 from the centre position 30 towards both sides symmetrically and folding them over at both edges as shown in Fig.13, or starting the winding from portion BC and folding it over to return to the centre as shown in Fig.12. In the case of winding only on portion BS, it may be wound by folding over at the edges as shown in Fig.14. Also, Fig.12a shows a way of winding asymmetrically.

The apparatus comprises a belt drum the diameter of which can be expanded or contracted.

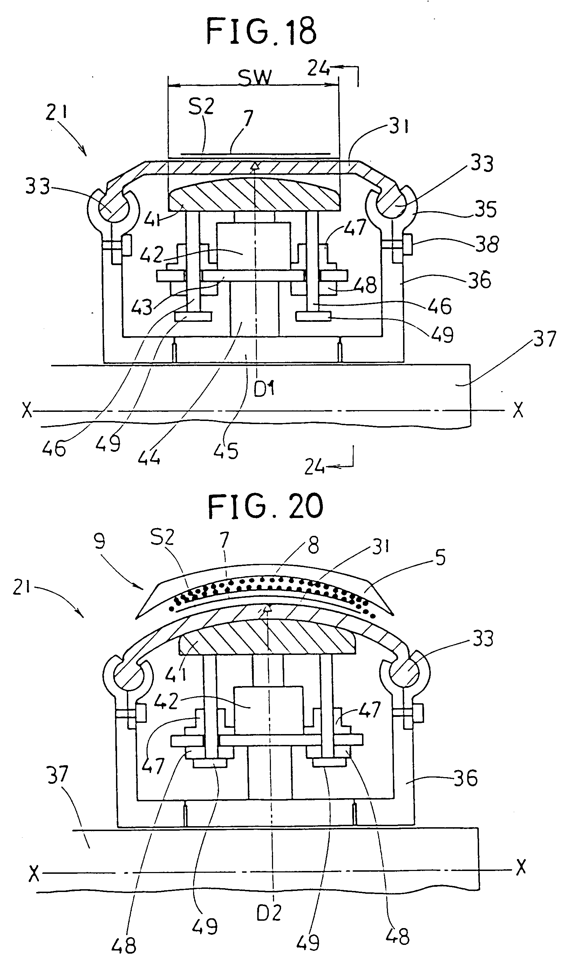

In Figs 18 to 20 a belt drum 21 has an extendible belt forming annular body 31, and a diameter expanding means 32 for expanding or contracting the outer diameter of the annular body 31.

The annular body 31 is composed of elastomeric material (for example) polyurethane or hard rubber) of which the JIS-A hardness is 70 to 98 degrees and whose thickness is uniform (for example, 5mm to 30mm), and it possesses a continuous outer circumference in the peripheral direction. If the hardness is less than 70 degrees, when the segment method described below is used as the means for expanding and contracting the diameter, the portion to cover the gap between segments becomes depressed and the entire forming annular body does not have the necessary roundness in the forming plane.

The annular body 31 has a pair of large diameter parts 33 at both its edges. Each large diameter part 33 is detachably supported by a pair of clamp rings 35,36. One clamp ring 36 is fixed to a shaft 37, while the other clamp ring 35 is fixed to the first clamp ring 36 by a bolt 38.

The majority of the outer circumferential surface S2 of the annular body 31 forms an assembly surface on which can be wound the belt 7, as shown in Fig. 18 with the sectional shape in the axial direction having a linear form. Subsequently when expanding the diameter, as shown in Fig.20, the sectional shape in the axial direction of the forming surface is the same as or close to the sectional shape in the axial direction of the band in the finished tyre in a mould, and more particularly it has a convex shape where the difference between the centre portion stretch of the band and the shoulder portion stretch is within 2%, thus the previously wound belt 7 is deformed in the same shape, and the forming surface for the band 8 is presented.

The first embodiment of the diameter expanding means is called a segment method by the present applicant, and is as shown in Figs. 18 to 20. It comprises a plurality of segments 41, for example, 8 to 32 segments, having the predetermined width and length over the entire circumference radially inside the annular body 31.

The segments 41 are made of a hard material, such as aluminium iron or steel. the sectional shape of each segment in the axial direction of the drum is the same as or similar to the sectional shape (finished shape) of the band of the finished tyre in the mould, and more practically a convex shape far which the absolute value of the difference between the middle portion stretch of the band and the shoulder portion stretch is 0% to 2%. The length SL of each segment is determined by the number of segments, and the width SW is determined by the belt width.

Each segment 41 is mounted on the rod of cylinder 42, and each cylinder 42 is fixed to the base frame 12. The base frame 43 is supported by a post 44, and the post is set up on a base 45, and the base is fixed to the shaft 37. Both ends of the base in the axial direction abut against the lower end of the clamp ring 36. Inside the sides of each segment in the axial direction, a pair of guide rods 46 are set up towards the axial X of the shaft 37. The guide rods 46 slide through holes provided in the base frame and the guides 47, and a stop 49 is fixes at the radially inner end of each quick rod 46.

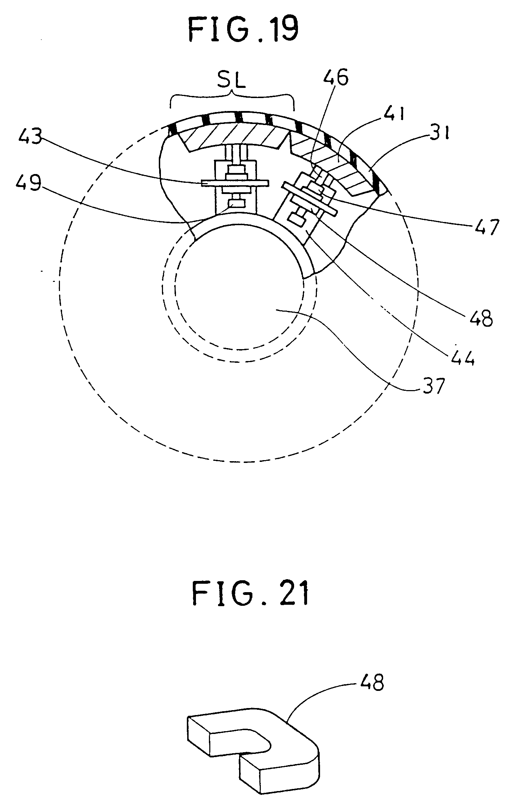

Inside the base frame 43 (at the drum shaft side), a drum outer diameter defining member 48 with a magnet (Fig 21) is detachably mounted so as to surround the guide rods 46.

As shown in Fig. 20, when the annular body 31 is expanded in diameter as the segments 41 are advanced in the radial direction by the stroke of the cylinder 42, the stop 49 hits the outer diameter defining member 48, so that the desired expanded drum outer diameter D2 is obtained. At this time, the section shape in the drum axial direction of the outer circumferential surface S2 of the annular body 31 is, as shown in Fig.20, similar to the shape of the segment 41 in the widthwise direction. Thus the sectional shape in the axial direction of the outer circumferential of the annular body 31 is deformed into the same or a similar shape to the final finished shape in the mould of the band. It is therefore deformed into a convex shape such that the absolute value of the difference between the stretches at the centre portion and shoulder portion of the band is between 0% and 2%.

The returning stroke of the cylinder 42 moves each segment 41 periodically backwards in the radial direction, and the annular body 31 takes up a non expanded state. The outer surface S2 of the annular body 31 at this time is, as shown in Fig. 18, linear in section in the axial direction of the drum, thus providing a belt winding and forming surface (non expanded drum outer diameter D1).

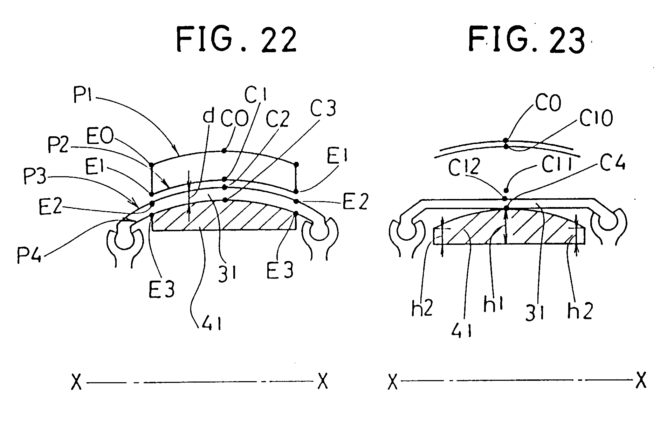

This is an example of a practical technique for designing the shape of the segments 41 in the drum shaft direction (widthwise direction) as a convex shape for which the absolute value of the stretch difference between the middle portion and shoulder portion of the band is between 0% and 2%. For example, if the tyre size is A and the stretch difference is to be 0%, an arbitrary value is selected from the effective stretch range of 1.0% to 5.0% (preferably 2.0% to 3.5%) for the belt middle portion, for example, 2.5%. Next, as shown in Fig. 22 on the basis of the profile P1 (convex solid line) of the sectional shape in the axial direction of the band (final finished shape) of the finished tyre mentioned in the tyre structural design sectional drawing, points 2.5% remote from the middle portion CO point and end portion EO point in the axial line X-direction, that is, the point at which the difference of the middle portion stretch and the shoulder stretch is zero (E1, C1, E1) are specified on the drawing. Linking these points, a profile P2 is obtained. This profile P2 has a similar shape to profile P1. Further, points E2, C2, E2 shifted by a distance corresponding to the belt thickness in the axial line X-direction are linked. This profile P3 is the axial sectional profile of the surface of the annular body 31 in the expanded diameter state. Linking points E3, Ce3, E3 shifted parallel in the axial line X-direction by the portion of the design thickness d of the annular body 31 from the profile P3, a profile P4 is obtained. This profile P4 is the sectional shape of the segment to be obtained when the tyre size is A, the band middle portion stretch is 2.5%, and the stretch difference between the middle portion and the shoulder portion is 0%. therefore, point C3 corresponds to the peak of the segment in the expanded mode.

In Fig.23, if CO is the centre position of the finished band, C10 is the centre position of the finished belt, C12 is the centre position of the non-expanded surface of the annular body 31, and C11 is the centre position of the wound belt, point C11 is the point shifted somewhat in the axial line X-direction from the end E1 of the profile P2 in Fig. 22 (as a result, it becomes possible to take out the assembly of the belt, band and tread after the completion of forming from the annular body in non expanded state) and the point further moved in the axial line X-direction by the portion of material thickness is the middle position C12 of the surface of the non expanded annular body 31. The point C4 further moved from this point in the axial line x-direction by the thickness d of the annular 31 body corresponds to the peak of the segment 41 in the non expanded state.

Meanwhile, the thickness h1 of the middle portion of the segment and the thickness h2 of the shoulder portion may be arbitrarily designed in consideration of the required strength and the positional relation with other constituent parts.

As stated above, the fastening force of the band at the shoulder portions of the belt can be prevented from following by setting the difference in stretch between 0% and 2%. This stretch difference can also be achieved, for instance, by using a conventional belt drum, linear in axial section shape as shown in Fig. 17 as well as the case using a belt drum having the above mentioned convex shape as shown in Fig. 20. In that case, the cord is slackened at the belt centre portion upon winding the and cord or is wound with a very small winding tension so that the shape of the belt when the tension acts on the band cord due to the application of inner pressure in a curing mould becomes substantially the same as the convex shape as shown in Fig.20. The pneumatic radial tyres of this invention result from such a process.

The operation of the belt drum having the expanded diameter means of the above system is explained below together with an embodiment of a method for forming the assembly of belt, band and tread rubber.

As shown in Fig. 18, when the air cylinder 42 is in the unoperated state, and therefore, the segments 41 and the annular body 31 covering the outside thereof are in the non expanded state, two plies made of steel cords having a cord angle of 20 degrees with respect to the circumferential direction are overlaid with their cords in mutually intersecting directions to form a belt 7 on the outer surface S2 (drum outer diameter D1) having a sectional shape in the axial direction which is linear on the belt drum 21.

In succession, as shown in Fig.18, each air cylinder 42 acts in the forward stroke, and each segment 41 is moved in the radial direction, the movement being stopped by the stops 49 on each segment contacting the outer diameter defining member 48.

Thus the sectional shape in the axial direction of the outer surface of the annular body 31 is deformed into the same or similar convex shape (drum outer diameter D2) of the final finished shape of the band, and as a natural consequence, the belt wound thereon is similarly deformed into a convex shape.

Then, a rubber coated single nylon cord is continuously spirally wound in the circumferential direction by using a device described below, at an angle of 0 degrees with respect to the circumferential direction on the radially outer surface of the deformed belt over at least its entire width so as to cover the deformed belt. (If the winding angle were to exceed 5 degrees, the hoop effect (effect of preventing the growth, namely lifting, of the belt by tightening the belt over the full circumference like a hoop is not sufficiently exhibited).

Similarly winding again thereon over the entire width, the band 8 of a two layer structure is formed. In addition to such a two layered full band structure, the band 8 may be formed, for example, into a structure composed of a single full band layer, a structure composed of 3 or more layers of full band, or a structure composed of at least one layer of full band and edge bands wound one at each edges of the belt.

Then, a tread rubber 5 in a belt like shape cut into the required size is wound radially outwardly over the band 8, and finally the tread rubber is pressed by a pressure roller (not shown), whereby the belt, band and tread rubber are consolidated into one body.

By these steps, an assembly 9 of belt, band 8 and tread rubber 5 is formed.

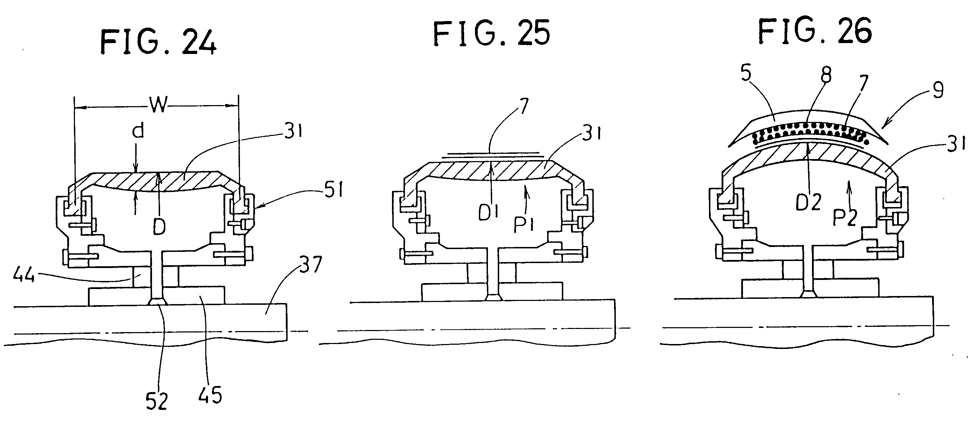

A second embodiment of the diameter expanding means, called the internal pressure system by the applicant, comprises, as shown in Figs. 24 and 25, a clamp ring 51 for holding both ends of the annular body 31, a post 44 for supporting the entire structure, a base 45 linking with the rotational shaft, and an air intake and discharge port 24. The annular body 31 and clamp ring 51 are sealed to prevent air leaks. The annular body 31 is inflated with air pressure so that the structure of the annular body 31 becomes convex in the axial direction. This convex shape varies depending on the internal air pressure the distribution of the thickness d of the annular body 31 and the width W thereof. The required convex shape is designed in the same concept as in the segment type. That is, on the basis of the convex shape of the tyre structure drawings, the shape at the position lowered by 2.5% is drawn which determines the point D2 and the shape shown in Fig.26. To reproduce this shape, the outer diameter D, thickness d, and width W (which us usually wider than the belt width) of the forming annular body when the internal pressure is zero, and the internal pressure P are determined. Therefore, this annular body 31 presents, at internal pressure P2, a band winding and forming surface of the same or similar convex shape to the sectional shape of the band (final finished shape) of the finished tyre.

The operation of the belt drum having the diameter expanding means of this internal pressure system is as follows.

The annular body 31 has a rather concave surface in the axial section shape when the internal air pressure is zero as shown in Fig.24. Therefore to begin with the internal pressure is raised to P1 (about 0.5kg/cm²), so that the sectional shape in the axial direction is made nearly linear as shown in Fig. 26, and a belt 7 assembled on its outer circumstances (drum outer diameter D1) in the same manner as in the above embodiment.

Next, as shown in Fig.26, the internal pressure is raised to P2 (for example, 2.0 kg/cm²), when the annular body 31 is expanded to an increased diameter, thus the sectional shape in the axial direction is changed to the same or similar convex shape as the final finished shape of the band.

Therefore, the belt wound thereon is similarly shaped.

Band 8 is formed radially outwardly of this shaped band 7 in the same manner as in the foregoing embodiment by using the device mentioned below.

Then, outside this band 8 in the radial direction, a tread rubber 5 is wound on as in the above mentioned embodiment. Thus the assembly 9 of the belt, band 8 and tread rubber 5 is completed.

In the above mentioned embodiment of the method for forming the belt band tread rubber assembly of this invention, the winding tension of the band cord is in principle constant. According to other embodiments of this invention, (a) the winding can be made so as to have a tension distribution such that the winding tension is greatest in the belt shoulder portions and is smallest in the belt centre portion, (b) the winding can be made so that the winding pitch of the band cords is from 0.5 to 5.0mm at the belt shoulder portions, and (c) both (a) and (b) can be combined.

The entire method for manufacturing a final radial tyre from each of the band forming methods of this invention is illustrated in the following embodiment.

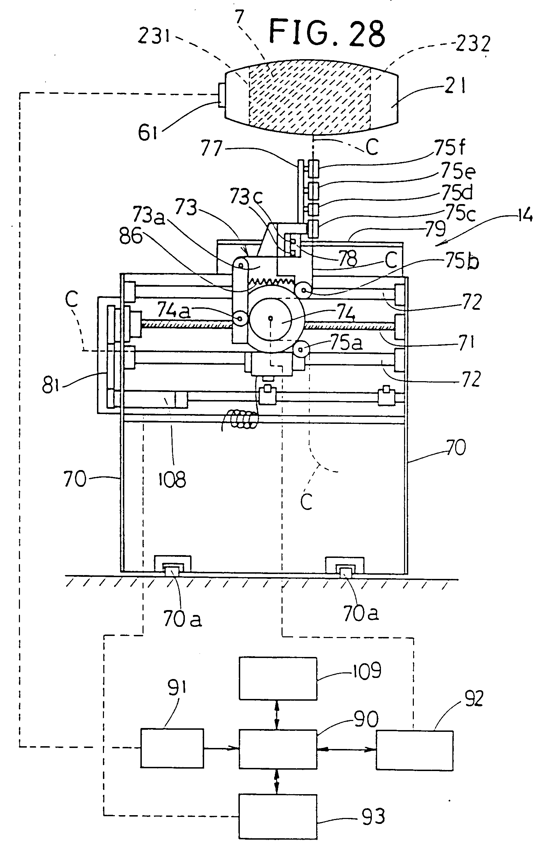

As stated above, the assembly 9 of belt 7, band 8 and tread rubber 5 formed on the belt drum 21 is conveyed onto a tyre forming drum 55 by means of a transfer ring (not shown) waiting between the tyre forming drum 55 and the belt drum 21 as shown in Fig.27. This conveying ring holds the outer circumference of the assembly 9 held as by contraction of its diameter.

The cylindrical carcass 2 on the tyre forming drum is shaped into a toroidal shape, and both bead holding tools are synchronously moved inwards in the axial direction so that the inflated outer surface of the carcass 2 is pressed to outwardly to the entire width of the inner surface of the belt 7 of the waiting assembly 9.

When the transfer ring is returned to the waiting position, a stitcher roller 56 presses the tread 5 and thus the assembly 9 to press it into the carcass 2, thereby completing a raw tyre.

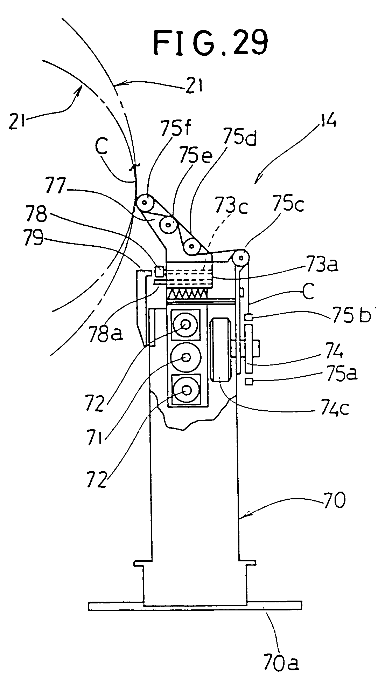

The band forming apparatus of this invention is described below with reference to Figs. 28 to 30. The band forming apparatus has a winding device 14 for winding a cord. When it is combined with a belt drum, there can be provided an apparatus for forming a belt band tread rubber assembly. In that case, the belt drum may be a drum having a linear band forming surface as conventionally used.

The winding device 14 comprises a let off means 73 for drawing out the cord C to be wound toward the belt drum 21, a transverse means for transversing the let off means in the widthwise direction, of the belt and a transverse control means for controlling the transverse of the let off means. To this basic construction may be further added a tension control means of controlling the cord winding tension.

This traverse means comprises a pair of guide shafts 72, and a screw shaft 71 disposed between them and rotated and driven by a motor 108. Each guide shaft and screw shaft are supported by a frame 70 in both end portions. The screw shaft is screwed into the let off means, and its rotation causes the let off means to traverse. The guide shaft guides this traverse.

The let off means 73 is threaded on the screw shaft 71, and it slides on the guide shaft 72 and has a moving frame 73a which is supported so as to be capable of traversing.

In the upper part of the moving frame 73a, there is provided an arm 77 for rotatably supporting a plurality of guide pulleys 75d to 75f. the arm 77 has a support bar 78a which has a guide roller 78 rotatably attached to the end thereof.

This arm 77 is slidably supported for movement in the belt drum direction on a guide rail 73c disposed in the upper part of the moving frame 73a, and it is held to the side of the belt drum 21 by a spring 85. As a result, the guide roller 78 is held against a copying plate 79 (drum shaft direction moving guide means) disposed on the frame 70, and so the let off means 73 is moved and guided in the belt widthwise direction while keeping a specified spacing to the surface of belt drum.

The copying plate 79 is formed identically with the sectional shape in the axial direction of the belt drum. As a result, the spacing between the belt drum surface and the cord let off means is uniform thereby preventing overlapping of cords or irregularity of the cord spacing intervals. When the belt drum is expanded and the shape in axial section of the drum at the time of band formation is shaped into the same or similar convex shape as the shape of the finished band in a mould, the copying plate of the same convex shape is used. Also, in the case where the sectional shape is linear then the copying plate is linear.

Incidentally, the arm 77 may be integrally fixed to the moving frame 73a.

The traverse control means controls the movements of the let off means to the start position or end position of cord winding or to the changing point of winding pitch or winding tension, and also controls the winding pitch by synchronising the winding pitch with the belt drum rotating speed (constant).

It comprises a servo motor 108 with an encoder as a drive for rotating the screw shaft 71, a drive unit 93, and a rotation pulse counter 91 for the belt drum 21.

The servo motor may be a DC motor, and the drive unit is, for example, a digital servo positioner "Position pack ID" made by Yasukawa Electric Cp. When an AC motor is used as the servo motor the above mentioned drive unit us not required.

In case or winding the cord at a predetermined tension, a tension control means is necessary.

This tension control means comprises a brake pulley 74 rotatably supported by the moving frame 73a of the let off means 73, a press roller 74a held to the guide pulley side by a spring 86, power brake 74c coaxially provided with the brake pulley 74, and a power supply unit 92 for causing the power brake 74c to generate a rotational resistance corresponding to a predetermined winding tension, thereby providing the cord C with a predetermined tension. The power supply unit is, for example, a DMP type power supply box DMP manufactured by Shinko Electric Co.

Therefore, by threading the brake pulley 74 with cord C, it is possible to send out and wind the cord around the belt drum through the guide pulley 75 at a predetermined tension.

It is needless to say that the power supply unit is not necessary, when a mechanical brake such as on air brake is used.

On the other hand, on a setting board 106 the data for the winding start position,the winding end position, the single or plural winding pitch set values, the single or plural winding tension set values, the winding pitch changing position, the winding tension changing position and other such values are all set up.

A control unit 90, which is a sequencer or a relay, is connected to the setting board 106 an encoder 61 through counter 91 in order to put in the rotation speed of the drum, and the power supply unit 92, respectively. The control unit 90 is designed so that the brake pulley 74 provides the cord with a predetermined winding tension.

The control unit 90 is also connected to a drive unit 93, and to the output from the drive unit 93. The servo motor 108 is driven to rotate the screw shaft 71, so that the let off means 73 is traversed in the desired direction to the predetermined position at a predetermined speed as described above.

The cord winding device 14 has a lower end of the frame 70 slidably supported by guide rails 70a, so that the spacing between end end of arm 77 and belt drum 21 can be adjusted.

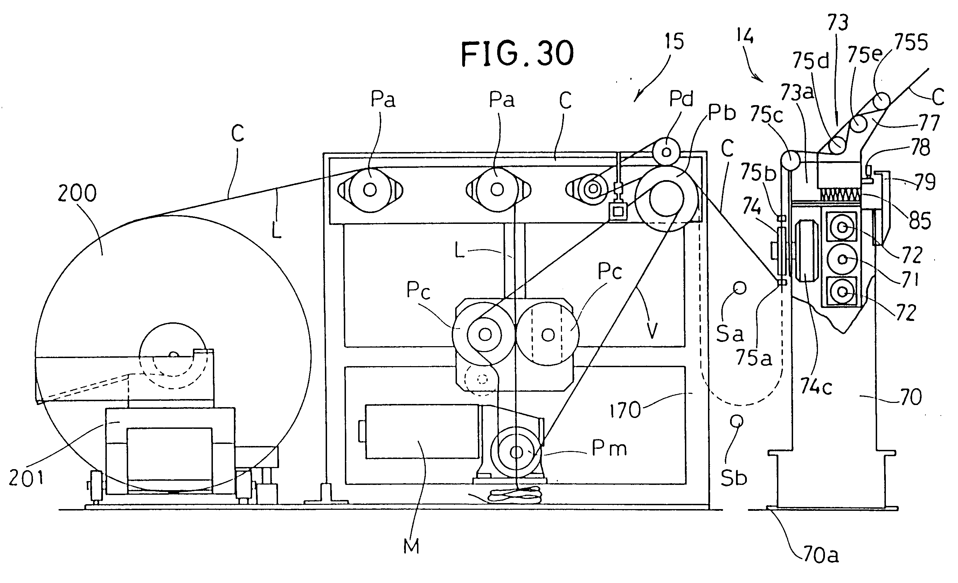

A cord let out device 15 has, as shown in Fig 30, a guide pulley Pa, let out roller Pb and a press roller Pd which are disposed in the upper part of the frame 170 together with a pair of pull rollers Pc in the middle part and a drive pulley Pm in the lower part.

The rotating force of the drive motor M is transmitted to the pulley Pb and Pcv through a V-belt to the pulley Pm.

A cord take up roll 200 is rotatably mounted on a let off stand 201, and around the roll the cord C is wrapped with a liner L or a cord having a coating rubber whose surface is coated with a stick preventing agent is wound without a liner. The pull rollers Pc draw out the liner L and the let out roller Pb and the press roller Pd send the cord C towards the winding device 14 while the guide pulley Pa guides it.

The cord being let out is led to the guide pulley 75a of the let off means 73 disposed on the frame 70.

In the case where a specified winding tension is not applied to the cord by means of the tension control means, the cord is passed through the guide pulley 75a and then through guide pulleys 75b to 75f without passing around the brake pulley 74, thus letting off the cord onto the belt drum 21. As a result, a slight tension due only to the resistance of the guide pulley itself is applied to the cord this so called tension free state). In this case, as shown in Fig. 30, a pair of phototubes Sa, Sb are disposed above and below between the frame 70 and the frame 170. the cord between the let out roller Pb and the guide pulley 75a is slackened in a U-formation and loop and the upper limit and lower limit of this loop are detected by the phototubes Sa, Sb, to allow adjustment and control of the cord feed rate to provide a festoon.

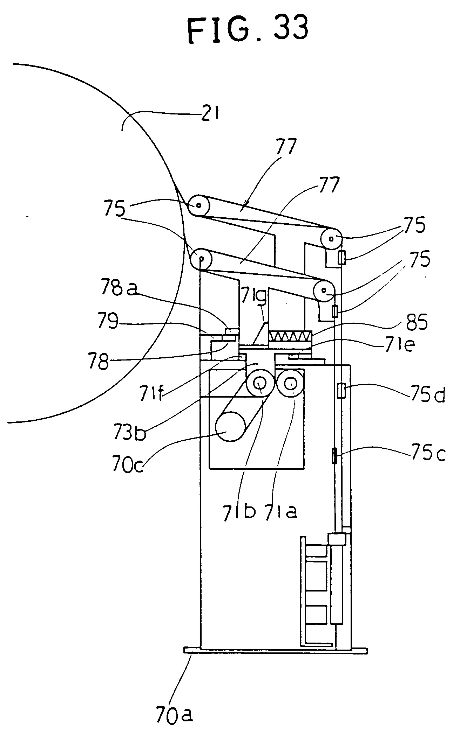

Incidentally, as shown in Fig.33, it is also possible, without using such a let out device, to connect the winding device 14 directly to a rubber coating device 16 for the cord C, and to lead the rubber coated cord directly to the guide pulley 75a of the let off means 73 of the winding device sequentially without taking up on the take up roller. In the drawing, numeral 141 shows a cord take up bobbin, 142 is an extruder, 143 is an extrusion die, 44 is a cord festoon, and 21 is a belt drum as mentioned before. In this method, since the cord C is wound onto the belt while coating with rubber, deterioration of the rubber material and entry of foreign matter (stick preventing agent etc) may be avoided compared to the foregoing take up roll method. Moreover, because of hot feeding, the adhesion between the belt and the cord is large, and so the take up liner is not needed.

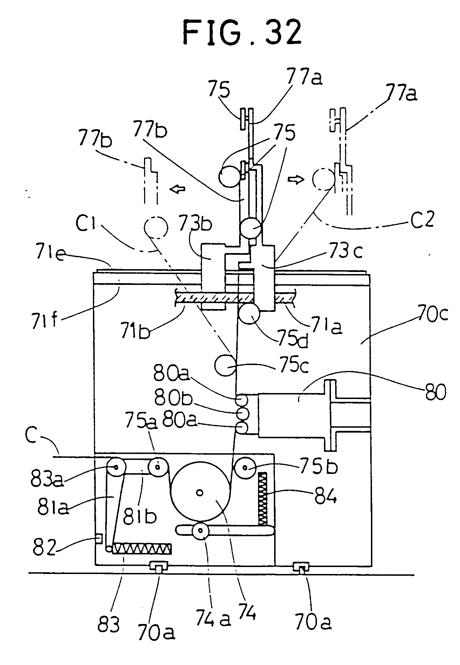

Figs. 32 and 33 show other examples of the band forming device of this invention, in which the basic construction is nearly the same, but a pair of let off means for cord C are provided. As a result, two cords can be simultaneously symmetrically outwardly wound from the centre position towards each shoulder portion of the belt.

In other words, a pair of let off means 73b, 73c are disposed side by side in the widthwise direction of the belt drum 21, and are slidably supported by rails 71e, 71f disposed parallel on the frame 70c. The let off means 73b, 73c are respectively threaded on the parallel screw shafts 71a, 71b arranged parallel to the rails. The screws 71a, 71b are rotated in the reverse direction and therefore the pair of let off means traverse in a mutually separating sense (see the arrow directions) from the centre position.

Also these let off means 73b, 73b are furnished with upwardly projecting arms 77a, 77b each of which is equipped with guide pulleys 75. The projecting arms as in the foregoing embodiments are independently biased by means of springs 85 towards the drum and are slidable on the rail 71g so that the roll 78a abuts against the copying plate 79. Thus it is possible to cause each let off means to be movable in the belt widthwise direction whilst maintaining the desired spacing to the belt drum surface.

On the frame 70c, furthermore, a tension detector (a differential transformer type) 80 is mounted.

When the cord C passes through the guide roll 80a and the detection roll 80b of this tension detector 80, the tension is sensed, and any deviation from the set value is fed back to the brake pulley 74. which is adjusted. Numeral 74a is a press roll which is thrust towards the brake pulley 74 by a spring 84 through a link.

The guide pulley 75a is rotatably supported on the arm 81b of the L-shaped arms 81a, 81b. A proximity switch 82 is provided apposite to the arm 81a, and a spring 83 is fixed, so that the guide pulley 75a is thrust in the direction of the arrow turning about the shaft 83a as a fulcrum. If excessive tension is applied to the cord due to some reason, the arm 81a actuates the proximity switch 82.

Incidentally, the two screw shafts 71a, 71b may have screw threads in the mutually opposite directions so that the two shafts may be rotated in the same direction. Or, instead of a pair of screw shafts, a single screw shaft having right and left threaded regions may be used. Or, instead of traversing by rotating a screw shaft by a motor, other means such as a cylinder may be used.

Still again, the independent control unit is not needed if the power supply unit 92 and drive unit 93 are additionally furnished with arithmetic functions of the control unit 90.

In the devices shown in Figs. 28 to 30, the winding start position 231, winding end position 232, winding pitch, winding tension and other data are set on the setting board 109, and they are stored in the control unit 90. The winding start position and end position denote the positions in the widthwise direction of the belt drum, and mean, for example, the distance from the middle of the belt drum 21. In consequence the servo motor 108 is drawn by the output from the drive unit 93, and the let off means 73 traverses from the waiting position, and moves to the predetermined winding start position. Then the leading end of the cord is pressed manually by an operator to the start position of the belt to hold the cord end. (It is of course possible to mechanise this step by means of a cylinder and link mechanism). Then when the automatic operation button is pressed, the belt drum begins to rotate, and the power brake 74c is put in action by the output from the power supply unit 92. Thus the cord is let out with a predetermined tension by the brake pulley 74. At the same time the let off means is traversed towards the winding end position, and the cord is continuously and spirally wound at a predetermined pitch. The speed of traverse at that time is set so that the winding pitch is synchronised to the signal from the encoder 61 of the belt drum, that is, the rotating speed of the belt drum.

The cord is wound on the belt 7, as shown in Figs. 8 to 14, by the above mentioned sending out of cord to the belt drum.

This winding operation is done in a so called one stroke scribbling process.

That is, using the devices shown in Figs.28 to 30, when winding is conducted to form a combined band of full band and edge bands as shown in Fig.11, the cord is wound so that its trace is an S-form in the arrow direction as shown in Fig. 12. In that case, as a natural consequence, the portion of the band formed in the initial stage of winding and the portion formed in the finishing stage become asymmetrical to each other.

Also, when winding as shown in Fig.11 is carried out using the device shown in Figs. 32 and 33, two cords C1 and C2 are wound in the directions of the arrows as shown in Fig.13, whereby the cords C1, C2 are wound continuously and spirally at a predetermined pitch in mutually symmetrical structures. It is preferable to shift the winding start position (winding start end) and winding end position (winding finishing end) of cords C1, C2 mutually in the circumferential direction. The reason is that since the strength changes suddenly at the cord ends it is necessary to disperse the influences of these end parts as widely as possible. Since the stress tends to be concentrated in the belt end parts, it is also preferable to position the end of each cord at the middle part of the belt as far as possible. Thus, by operating the pair of let off means 73b, 73c simultaneously in the mutually reverse directions, the time required for winding the cord may be reduced to half of the time required for winding by the usual single winding means, so that productivity is doubled. Moreover, particularly when a tape like material 11 composed of several cords as shown in Fig.5 is used, the winding efficiency can be further enhanced.

As explained above according to the method of this invention, upon forming an assembly of belt, band and tread rubber using a belt drum, the band is formed into the same or similar shape as its final shape in the mould.

This shape is usually a convex shape where the value of the difference between the middle portion stretch and the shoulder portion stretch of the band is less than 2%. Consequently, the residual elongation and thermal shrinkage of the cord in the moulded tyre is made substantially uniform between the middle portion and the shoulder portions, thus lifting of the belt by centrifugal force in running is prevented and the high speed durability of radial tyres is enhanced.

Also, one or more organic fibre cords are continuously and spirally wound, parallel to the circumferential direction, on the outer surface of the belt, so that the winding tension is uniform over the entire width of the belt, or as required a maximum at the shoulder portion, or the winding pitch may be dense at the belt shoulder portion.

Consequently, the difference in stretch between the belt shoulder portion and belt centre portion of the vulcanised tyre is reduced, and the thermal shrinking force of the belt shoulder portion is improved, so that the action to prevent lifting of the belt in use is strongly achieved so this separation damage of the belt due to lifting in use is prevented more securely.

Besides, by using the device of this invention, the execution of the above method can be done more efficiently and precisely.

Further, according to this invention since the belt drum can be deformed in a convex shape after winding the belt on the cylindrical belt drum, and thereafter one tape like material, formed by covering several cords with rubber, is spirally wound to adhere it tightly over the entire width of the drum, the belt is prevented from unusual movement when winding the band, and hence the belt is free from deformation, creases or slack cords. Still more, in the method of this invention, since the belt is wound on a cylindrical belt drum, the belt can be wound in good alignment, without causing meandering, when winding.

Furthermore, since the belt drum is an annular body continuous in the circumferential direction, different from the conventional segment type in which the drum surface is formed by segments, it becomes possible to adhere the belt without steps i.e., smoothly, especially at both ends of the both sides in the circumferential direction, and therefore the corrugated application as experienced by the conventional type drum is avoided, and separation damage of the belt shoulder portion can be prevented.

This invention is applicable for radial tyres having various structures, tread patterns and tyre sizes, and in particular this invention is effectively applicable to flattened tyres for high speed running.

## Claims

1. An apparatus to form a band on the belt assembly of a radial tyre where the band (8) is a continuous, spiral winding of one or more organic fibre cords (C) wound on the circumferential surface of a belt formed on a belt drum or ring (21), said apparatus comprising a let off means (73) for drawing off the cord (C) to be wound towards the belt (7), a traverse means for traversing the let off means (73) in the widthwise direction of the belt (7) and a traverse controlling means for controlling the traverse of said let off means, the let off means comprising a moving frame (73a) capable of traversing an arm (77) mounted on the moving frame (73a) and a plurality of guide pulleys (75d-75f) supported by the arm (77) and guiding the cord (C) to be wound, characterised in that the traverse means (73) comprises a screw shaft (71) rotatably driven and threaded to the let off means, and a guide shaft (72) for guiding the traverse of the let off means and the traverse controlling means comprises a motor (108) for driving said screw shaft (71), a drive unit (93) and a pulse counter (91) for the belt ring or belt drum (21).

2. An apparatus according to claim 1, characterised in that the let off means includes a tension control means for controlling the winding tension of the Cord (C).

3. An apparatus according to claim 2, characterised by the tension control means comprising a brake pulley (74) and a power supply unit (92).

4. An apparatus according to claim 2, characterised in that the tension control means comprises a plurality of guide pulleys threaded with a cord to be wound.

5. An apparatus according to any of claims 1 to 4, comprising a variable diameter belt drum (21) comprising an annular body (31) made of an elastomeric material which is continuous in the circumferential direction and is stretchable, and a means for expanding and contracting the diameter of the annular body (31), characterised in that the circumferential surface (S2) of the annular body (31) in the diameter nonexpanded state is linear in axial section and forms the surface (S2) for winding the belt (7) and the circumferential surface (S2) of the annular body (31) in the expanded diameter state has a shape identical or close to the finished shape of the band (8) in a tyre mould in axial section and forms the surface for winding the band (8).

6. An apparatus according to claim 5, characterised in that the shape of the circumferential surface (S2) of the annular body (31) in the expanded diameter state is convex such that the difference between the stretch at the centre portion and that at the shoulder portions of the band (8) is from 0 to 2%.

7. An apparatus according to claim 5, characterised in that the expanding and contracting means comprises a multiplicity of segments (41) which are arranged inside the entire circumference of the annular body (31) whose sectional shape in the axial direction is convex such that the difference between the stretch at the centre portion and that at the shoulder portions of the band (8) on the annular body (31) is from 0 to 2% and a driving means for making the annular body (31) into its expanded state or contracted state by advancing or returning the segments (41) synchronously in the radial direction.

8. An apparatus according to claim 5, characterised in that the expanding and contracting means is a fluid in the annular body (31) the pressure of which may be increased and decreased.

9. An apparatus according to claim 1, characterised in that the let off means (73) is provided with a copying plate (7a) the shape of which is the same as the shape in axial section of the belt drum (21) in the expanded diameter state.

## Patentansprüche

1. Eine Vorrichtung, um ein Band auf der Gürtelanordnung eines Radialreifens zu bilden, wo das Band (8) eine kontinuierliche Spiralwicklung von einem oder mehreren organischen Fasercorden (C) ist, die auf die Umfangsoberfläche eines Gürtels gewickelt sind, der auf einer Gürteltrommel oder einem Ring (21) gebildet ist, wobei die Vorrichtung umfaßt ein Ablaßmittel (73) zum Abziehen des zu wickelnden Cordes (C) in Richtung auf den Gürtel (7), ein Traversmittel zum Traversieren des Ablaßmittels (73) in der Richtung der Breite des Gürtels (7) und ein Traversiersteuermittel zum Steuern der Traverse des Ablaßmittels, wobei das Ablaßmittel einen sich bewegenden Rahmen (73a) aufweist, der fähig ist, einen Arm (77) zu traversieren, der auf dem sich bewegenden Rahmen (73a) angebracht ist, und eine Vielzahl von Führungsriemenscheiben (75d-75f), die von dem Arm (77) getragen sind und den zu wickelnden Cord (C) führen, dadurch gekennzeichnet, daß das Traversmittel (73) eine Schraubenwelle (71) umfaßt, die drehbar angetrieben und über Gewinde mit dem Ablaßmittel verbunden ist, und eine Führungswelle (72) zum Führen der Traverse des Ablaßmittels, und das Traversiersteuermittel einen Motor (108) zum Antreiben der Schraubenwelle (71), eine Ansteuerungseinheit (93) und einen Pulszähler (91) für den Gürtelring oder die Gürteltrommel (21) umfaßt.

2. Eine Vorrichtung nach Anspruch 1, dadurch gekennzeichnet, daß das Ablaßmittel ein Spannungssteuermittel zum Steuern der Wicklungsspannung des Cords (C) umfaßt.

3. Eine Vorrichtung nach Anspruch 2, dadurch gekennzeichnet, daß das Spannungssteuermittel eine Bremsriemenscheibe (74) und eine Leistungsversorgungseinheit (92) umfaßt.

4. Eine Vorrichtung nach Anspruch 2, dadurch gekennzeichnet, daß das Spannungssteuermittel eine Vielzahl von Führungsriemenscheiben umfaßt, die mit einem zu wickelnden Cord umfädelt sind.

5. Eine Vorrichtung nach einem der Ansprüche 1 bis 4, mit einer Gürteltrommel (21) mit variablem Durchmesser mit einem ringförmigen Körper (31), der aus einem elastomeren Material hergestellt ist, welcher in der Umfangsrichtung kontinuierlich ist und dehnbar ist, und einem Mittel zum Expandieren und Kontrahieren des Durchmessers des ringförmigen Körpers (31), dadurch gekennzeichnet, daß die Umfangsoberfläche (S2) des ringförmigen Körpers (31) in dem Zustand mit nicht expandiertem Durchmesser linear im axialen Schnitt ist und die Oberfläche (S2) zum Wickeln des Gürtels (7) bildet und die Umfangsoberfläche (S2) des ringförmigen Körpers (31) in dem Zustand mit ausgedehntem Durchmesser eine Gestalt identisch oder nahe der fertiggestellten Gestalt des Bandes (8) in einer Reifenform im axialen Schnitt aufweist und die Oberfläche zum Wickeln des Bandes (8) bildet.

6. Eine Vorrichtung nach Anspruch 5, dadurch gekennzeichnet, daß die Gestalt der Umfangsoberfläche (S2) des ringförmigen Körpers (31) in dem Zustand mit expandiertem Durchmesser derart konvex ist, daß die Differenz zwischen der Dehnung bei dem Mittelteil und jenem bei den Schulterteilen des Bandes (8) von 0 bis 2 % beträgt.

7. Eine Vorrichtung nach Anspruch 5, dadurch gekennzeichnet, daß das Expandier- und Kontrahiermittel umfaßt eine Vielzahl von Segmenten (41), welche innerhalb des gesamten Umfangs des ringförmigen Körpers (31) angeordnet sind, dessen Querschnittsgestalt in der axialen Richtung konvex ist, derart, daß die Differenz zwischen der Dehnung bei dem Mittelteil und jener bei den Schulterteilen des Bandes (8) auf dem ringförmigen Körper (31) von 0 bis 2 % beträgt, und ein Ansteuerungsmittel, um den ringförmigen Körper (31) zu seinem ausgedehnten Zustand oder kontrahierten Zustand zu bringen, indem die Segmente (41) synchron in der radialen Richtung vorgeschoben oder zurückgeführt werden.

8. Eine Vorrichtung nach Anspruch 5, dadurch gekennzeichnet, daß das Expandier- und Kontrahiermittel ein Fluid in dem ringförmigen Körper (31) ist, dessen Druck erhöht und erniedrigt werden kann.

9. Eine Vorrichtung nach Anspruch 1, dadurch gekennzeichnet, daß das Ablaßmittel (73) mit einer Kopierplatte (7a) versehen ist, deren Gestalt die gleiche wie die Gestalt im axialen Schnitt der Gürteltrommel (21) in dem Zustand mit ausgedehntem Durchmesser ist.

## Revendications

1. Appareil destiné à former une bande sur l'ensemble de ceinture d'un pneumatique à carcasse radiale, la bande (8) étant un enroulement spiralé continu d'un ou plusieurs câblés (C) de fibres organiques enroulés à la surface circonférentielle d'une ceinture formée sur un anneau ou tambour (21) de ceinture, l'appareil comprenant un dispositif (73) de dégagement destiné à tirer le câblé (C) à enrouler vers la ceinture (7), un dispositif de déplacement transversal du dispositif (73) de dégagement dans la direction de la largeur de la ceinture (7) et un dispositif de commande du déplacement transversal du dispositif de dégagement, le dispositif de dégagement possédant un châssis mobile (73a) capable de provoquer un déplacement transversal d'un bras (77) monté sur le châssis mobile (73a) et plusieurs poulies de guidage (75d-75f) supportées par le bras (77) et guidant le câblé (C) à enrouler, caractérisé en ce que le dispositif (73) de déplacement transversal comporte un arbre fileté (71) entraîné en rotation et coopérant par vissage avec le dispositif de dégagement, et un arbre (72) de guidage du déplacement transversal du dispositif de dégagement, et le dispositif de commande de déplacement transversal comporte un moteur (108) destiné à entraîner l'arbre fileté (71), une unité (93) de pilotage et un compteur (91) d'impulsions pour l'anneau ou tambour (21) de ceinture.

2. Appareil selon la revendication 1, caractérisé en ce que le dispositif de dégagement comporte un dispositif de réglage de tension destiné à régler la tension d'enroulement du câblé (C).

3. Appareil selon la revendication 2, caractérisé en ce que le dispositif de réglage de tension comporte une poulie (74) de freinage et une unité (92) d'alimentation.

4. Appareil selon la revendication 2, caractérisé en ce que le dispositif de réglage de tension comporte plusieurs poulies de guidage sur lesquelles passe un câblé à enrouler.

5. Appareil selon l'une des revendications 1 à 4, comprenant un tambour (21) de ceinture de diamètre variable comportant un corps annulaire (31) formé d'un matériau élastomère qui est continu dans la direction circonférentielle et qui peut être étiré, et un dispositif de dilatation et de contraction du diamètre du corps annulaire (31), caractérisé en ce que la surface circonférentielle (S2) du corps annulaire (31), à l'état dans lequel le diamètre n'est pas dilaté, est rectiligne en coups axiale et forme la surface (S2) d'enroulement de la ceinture (7), et la surface circonférentielle (S2) du corps annulaire (31) à l'état de diamètre dilaté a une configuration identique à la configuration terminée de la bande (8) ou proche de cette configuration terminée dans un moule de pneumatique, en coupe axiale, et forme la surface d'enroulement de la bande (8).

6. Appareil selon la revendication 5, caractérisé en ce que la configuration de la surface circonférentielle (S2) du corps annulaire (31) à l'état de diamètre dilaté, est convexe si bien que la différence entre l'allongement dans la partie centrale et l'allongement dans les parties d'épaulement de la bande (8) est comprise entre 0 et 2 %.

7. Appareil selon la revendication 5, caractérisé en ce que le dispositif de dilatation et de contraction comporte plusieurs segments (41) placés à l'intérieur de l'ensemble de la circonférence du corps annulaire (31) dont la configuration en coupe, en direction axiale, cet convexe, si bien que la différence entre l'allongement dans la partie centrale et l'allongement dans les parties d'épaulement de la bande (8) sur le corps annulaire (31) est comprise entre 0 et 2 % et un dispositif d'entraînement destiné à mettre le corps annulaire (31) à son état dilaté ou à son état contracté, par avance ou retour des segments (41) en synchronisme en direction radiale.

8. Appareil selon la revendication 5, caractérisé en ce que le dispositif de dilatation et de contraction est un fluide présent dans le corps annulaire (31) et dont la pression peut être augmentée et réduite.

9. Appareil selon la revendication 1, caractérisé en ce que le dispositif de dégagement (73) comporte une plaque (7a) de reproduction dont la configuration est la même que la configuration en coupe axiale du tambour (21) de ceinture dans l'état dans lequel son diamètre est dilaté.
